# EUROPÄISCHE PATENTSCHRIFT

(11) **EP 2 673 533 B1**
(45) Veröffentlichungstag und Bekanntmachung des Hinweises auf die Patenterteilung: **15.04.2015**
(21) Anmeldenummer: 12704655.5
(22) Anmeldetag: 09.01.2012
(51) Int. Cl.: F16J 9/12, F16J 9/14

(54) **KOLBENRING**
PISTON RING
SEGMENT DE PISTON

(30) Priorität: 09.02.2011 DE 102011010656
(43) Veröffentlichungstag der Anmeldung: 18.12.2013
(73) Patentinhaber: Federal-Mogul Burscheid GmbH, 51399 Burscheid (DE)
(72) Erfinder: ESSER, Peter-Klaus, 51515 Kürten (DE)
(74) Vertreter: Döpp, Ludger
(86) Internationale Anmeldenummer: PCT/DE2012/000013
(87) Internationale Veröffentlichungsnummer: WO 2012/107012

(56) Entgegenhaltungen:
- EP-A1- 1 359 351

## Beschreibung

Die Erfindung betrifft einen Kolbenring, insbesondere einen Kompressionskolbenring, gemäß gattungsbildendem Teil des ersten Patentanspruchs.

Die Laufflächen von Kolbenringen, insbesondere Kompressionskolbenringen, in Verbrennungskraftmaschinen zeigen durch thermische und mechanische Beaufschlagung eine besonderes hohe Belastung an den Ringstoßenden. Dies führt in der Regel zu übermäßigem Verschleiß und ggf. zu thermischer Überlastung mit nachfolgendem Fressen. Diese Stelle des Kolbenrings stellt eine der wesentlichen Schwachstellen für die Lebensdauer des Kolbenrings dar.

Kolbenringe werden auf der Lauffläche vielfach mit harten Beschichtungen versehen. Diese können das partielle Phänomen jedoch nicht generell verhindern. Zur Entlastung der Stoßenden kann die Ringform so optimiert werden, dass der Stoßdruck minimiert wird.

Beispiele derartiger Maßnahmen werden wie folgt wiedergegeben:

Die DE 41 40 232 C1 offenbart einen selbstspannenden Kolbenring mit ungleichmäßiger Radialdruckverteilung. Der auf Nenndurchmesser gespannte Kolbenring weist an den Stoßenden im Bereich a < 25° einen Krümmungsradius auf, der dem Zylinderradius entspricht. Im Winkelbereich β = 25 - 35° beidseitig des Ringstoßes ist der Krümmungsradius kleiner als der Zylinderradius, so dass die Radialdruckverteilung an den Stoßenden nahezu auf 0 und im Winkelbereich β = 25 - 35° auf über 200 % des mittleren Radialdrucks sich einstellt.

In der DE 36 12 456 A1 wird ein Kolbenring beschrieben, bei welchem durch konstruktive Maßnahmen im Stoßbereich der Druckausgleich über die Unterflanke erschwert wird und wobei die Stoßenden ggf. mit zusätzlichen Federelementen oder durch eine eigene federartige Ausbildung, entgegen der Massenkraft, auf die Unterflanke gedrückt werden.

In der DE 100 41 802 C1 wird ein Kompressionskolbenring beschrieben, der am Ringumfang Querschnittsschwächungen aufweist, wobei der Ringumfang des Kompressionskolbenrings in vier Quadranten aufgeteilt ist. Bei Positionierung der einen Stoßkante im ersten und der anderen Stoßkante im vierten der gedachten Quadranten befindet sich die jeweilige Querschnittsschwächung ausschließlich im ersten und vierten Quadranten beiderseits des Stoßes, und zwar im stoßnahen Umfangsbereich über die gesamte Ringhöhe gesehen, wobei im Stoßbereich wieder die gleiche radiale Wandstärke, wie im Bereich des Ringrückens gegeben ist.

Die DE 10 2007 007 962 B3 offenbart einen Kolbenring mit einem Grundkörper, der eine mit einer Kammerung versehene Lauffläche, eine obere und eine untere Flankenfläche sowie eine innere Umfangsfläche aufweist, wobei zumindest die Kammerung mit mindestens einer Verschleißschutzschicht versehen ist und auf der Lauffläche zumindest partiell eine PVD-Deckschicht aufgebracht ist, dergestalt, dass der Grundkörper in seinem fertigen Zustand lediglich randbereichsseitig, d.h. außerhalb der Kammerung, die PVD-Deckschicht aufweist.

Die EP 1359351 A1 offenbart einen Kolbenring, beinhaltend einen Grundkörper, der eine radial äußere Lauffläche, eine radial innere Umfangsfläche, eine obere und eine untere Flankenfläche sowie einen Stoß aufweist.

Alle vorab beschriebenen Maßnahmen waren noch nicht geeignet, das Phänomen der Stoßüberlastung an Kolbenringen, insbesondere Kompressionskolbenringen, vollständig zu beseitigen. Dies gilt insbesondere bei axial niedrig bauenden Ringen.

Der Erfindung liegt die Aufgabe zugrunde, einen Kolbenring, insbesondere einen Kompressionskolbenring, bereitzustellen, bei welchem im Betriebszustand keine Stoßüberlastung im Bereich des Stoßes mehr gegeben ist, so dass sich eine erhöhte Lebensdauer gegenüber dem Stand der Technik einstellt.

Diese Aufgabe wird dadurch gelöst, dass die Lauffläche mit mindestens einer umlaufend ausgebildeten Kammerung versehen ist, die eine verschleißfeste Beschichtung, insbesondere eine PVD-Beschichtung, aufnimmt, wobei, ausgehend von den Stegkanten des Stoßes, in Umfangsrichtung des Grundkörpers gesehen, außerhalb der Beschichtung ein Stegansatz am Grundkörper angeformt ist, der sich mit vorgebbarer radialer Höhe über eine definierte Umfangslänge beiderseits des Stoßes erstreckt.

Vorteilhafte Weiterbildungen des Erfindungsgegenstandes sind den Unteransprüchen zu entnehmen.

Insbesondere bei PVD-beschichteten Kolbenringen, insbesondere Kompressionskolbenringen, kann durch geeignete Ringauslegung der Stoß so ausgestaltet werden, dass in der Einlaufzeit des Kolbenrings, insbesondere des Kompressionskolbenrings, ein mittlerer Stoßdruck vorliegt. Der ausschließlich im stoßnahen Bereich des Kolbenrings vorgesehene Stegansatz wird aus dem Material des Grundkörpers, beispielsweise Gusseisen oder Stahl, gebildet und ist außerhalb der Beschichtung vorgesehen. Im weiteren Motorbetrieb arbeitet sich dieser relativ weiche Ansatz verhältnismäßig schnell ab und der Kolbenring läuft anschließend auf seinem ausgewiesenen Scheitelpunkt. Erst dann kommt die tatsächliche Ringkontur des Kolbenrings zum Tragen. Durch die nun erreichte Stoßentlastung kann sich in diesem Bereich ein Ölfilm, gleich oder dicker als am restlichen Umfang des Kolbenrings, einstellen. Die verbesserte oder gleichmäßigere Schmierung wird eine thermische Überlastung des Stoßbereiches vermeiden, den Verschleiß reduzieren und somit die Standzeit des Kolbenrings, insbesondere des Kompressionskolbenrings, erhöhen.

Der Erfindungsgegenstand ist anhand eines Ausführungsbeispiels in der Zeichnung dargestellt und wird wie folgt beschrieben. Es zeigen:
- Figur 1: Draufsicht auf einen mit einem Stoß versehenen Kolbenring;
- Figur 2: Querschnitt durch den mit einer Kammerung versehenen Kolbenring gemäß Figur 1 vor der Einlaufphase;
- Figur 3: Radialdruckverteilung des Kolbenrings gemäß Figur 2;
- Figur 4: Querschnitt des mit der Kammerung versehenen Kolbenrings gemäß Figur 1 nach der Einlaufphase;
- Figur 5: Radialdruckverteilung des Kolbenrings gemäß Figur 4.

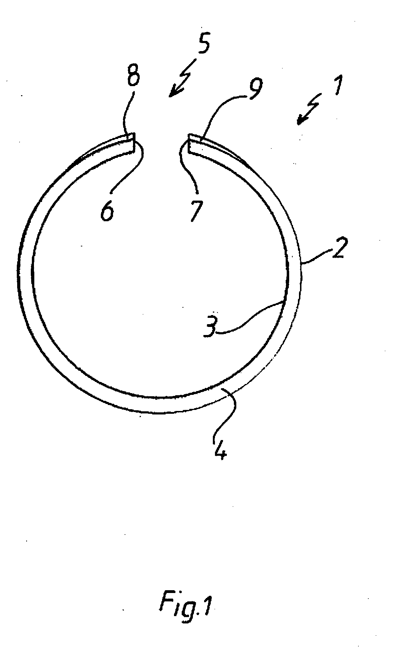

Figur 1 zeigt einen als Kompressionskolbenring ausgebildeten Kolbenring, beinhaltend einen Grundkörper 1, in diesem Beispiel bestehend aus Gusseisen. In der Draufsicht des Grundkörpers 1 sind die Lauffläche 2, die innere Umfangsfläche 3 sowie die obere Flankenfläche 4 und der Stoß 5 erkennbar. Ausgehend von den Stoßkanten 6,7 des Stoßes 5 erstreckt sich in Umfangsrichtung beiderseits des Stoßes 5 ein Stegansatz 8,9 vorgebbarer radialer Höhe und definierter Umfangslänge. Der Stegansatz 8,9 hat motorabhängig eine radiale Höhe von mindestens 1-10 µm und kann in den Radius des Grundkörpers 1 über maximal 45° Umfangslänge auslaufen. Die jeweilige Stegerhöhung kann abhängig vom Motortyp sein.

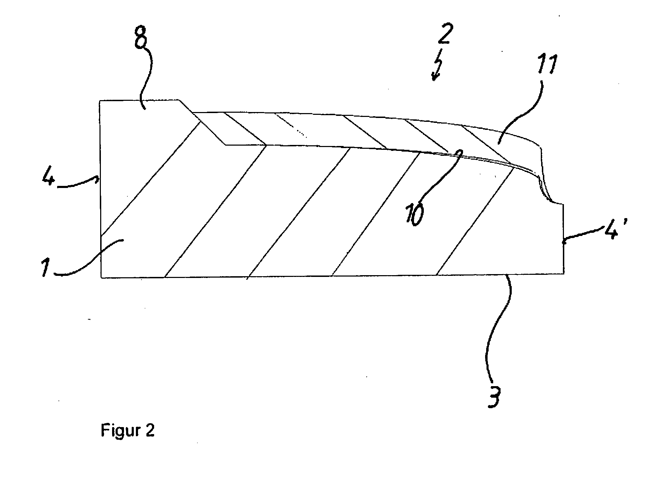

Figur 2 zeigt den Grundkörper 1 gemäß Figur 1 im Querschnitt. Erkennbar ist die Lauffläche 2, die innere Umfangsfläche 3, die obere, d.h. dem Brennraum zugewandte Flankenfläche 4 sowie die untere, d.h. dem Zylinderkurbelgehäuse zugewandte Flankenfläche 4'. Der Grundkörper 1 ist mit einer umlaufend ausgebildeten Kammerung 10 versehen, die eine verschleißfeste Beschichtung 11, in diesem Beispiel gebildet durch eine PVD-Schicht, aufnimmt. Außerhalb der Beschichtung 11 ist der jeweilige, in Figur 1 dargestellte Stegansatz, hier Stegansatz 8, aus dem Material des Grundkörpers 1 vorgesehen. Wie dargestellt, steht der Stegansatz 8 mit vorgebbarer radialer Höhe oberhalb der Beschichtung 11 vor. Figur 2 zeigt den Grundkörper 1 vor seiner Einlaufphase.

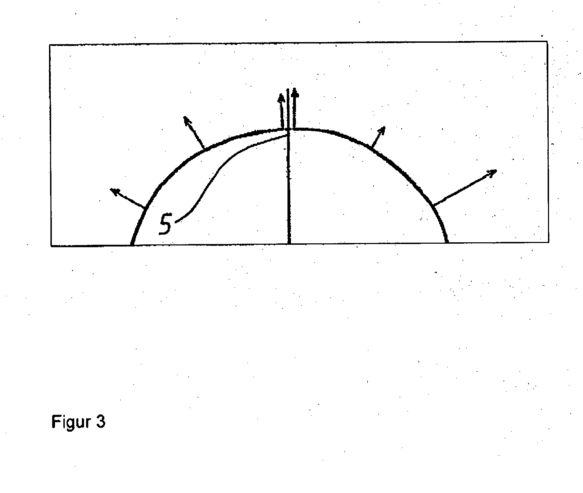

Figur 3 zeigt die Radialdruckverteilung des Grundkörpers 1 vor der Einlaufphase des Kolbenrings. Der Stoß 5 ist hierbei nur angedeutet, wobei erkennbar ist, dass die Radialdruckverteilung im Stoßbereich vor der Einlaufphase relativ groß ist.

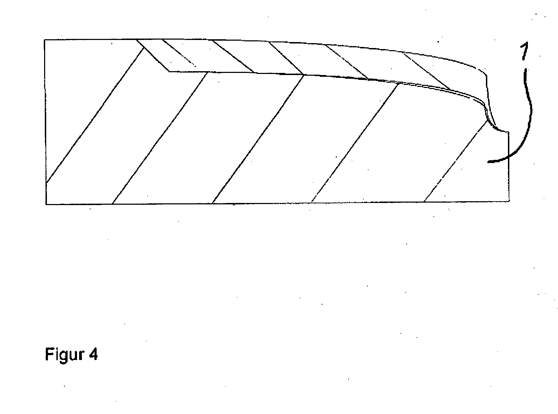

Figur 4 zeigt den Grundkörper 1 des Kolbenrings gemäß Figur 1 nach seiner Einlaufphase. Es ist erkennbar, dass der in Figur 2 dargestellte Stegansatz 8 abgearbeitet ist, so dass der Grundkörper 1 nun auf seinem ausgewiesenen Scheitelpunkt an der nicht weiter dargestellten Gegenlauffläche zum Tragen kommt.

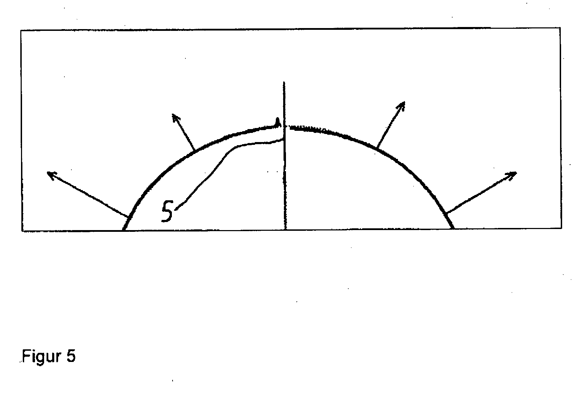

Figur 5 zeigt die Radialdruckverteilung des Grundkörpers 1 nach seiner Einlaufphase, wobei erkennbar ist, dass im nur angedeuteten Stoß 5 eine geringere Radialdruckverteilung als vor der Einlaufphase gegeben ist, Durch die nun erreichte Stoßentlastung kann sich in diesem Bereich ein Ölfilm, gleich oder dicker als am restlichen Umfang des Grundkörpers, bilden. Infolge dieser verbesserten oder vergleichmäßigteren Schmierung wird eine thermische Überlastung des Stoßbereiches vermieden und der Verschleiß zugunsten der Standzeit reduziert.

Nach Motorläufen zeigte der erfindungsgemäße Kolbenring keine durchgelaufenen Stöße, vielmehr einen gleichmäßigen Tragspiegel.

## Patentansprüche

1. Kolbenring, insbesondere Kompressionskolbenring, mit einem Grundkörper (1), der eine radial äußere Lauffläche (2), eine radial innere Umfangsfläche (3), eine obere (4) und eine untere Flankenfläche (4') sowie einen Stoß (5) aufweist, **dadurch gekennzeichnet, dass** die Lauffläche (2) mit mindestens einer umlaufend ausgebildeten Kammerung (10) versehen ist, die eine verschleißfeste Beschichtung (11), insbesondere eine PVD-Beschichtung, aufnimmt, wobei, ausgehend von den Stegkanten (6,7) des Stoßes (5), in Umfangsrichtung des Grundkörpers (1) gesehen, außerhalb der Beschichtung ein Stegansatz (8,9) am Grundkörper (1) angeformt ist, der sich mit vorgebbarer radialer Höhe über eine definierte Umfangslänge beiderseits des Stoßes (5) erstreckt.

2. Kolbenring nach Anspruch 1, **dadurch gekennzeichnet, dass** der Stegansatz (8,9) aus dem Material des Grundkörpers (1), insbesondere aus Gusseisen oder Stahl, gebildet ist.

3. Kolbenring nach Anspruch 1 oder 2, **dadurch gekennzeichnet, dass** die radiale Höhe des Stegansatzes (8,9) zwischen 1 und 10 µm beträgt.

4. Kolbenring nach einem der Ansprüche 1 bis 3, **dadurch gekennzeichnet, dass** der Stegansatz (8,9), ausgehend von der jeweiligen Stoßkante (6,7), über einen Umfangswinkel von bis zu 45° in den Radius des Grundkörpers (1) einläuft.

5. Kolbenring nach einem der Ansprüche 1 bis 4, **dadurch gekennzeichnet, dass** der Stegansatz (8,9) stoßkantenseitig seine maximale radiale Höhe aufweist.

## Claims

1. A piston ring, especially a compression piston ring, comprising a base body (1) which comprises a radially outer bearing surface (2), a radially inner circumferential surface (3), an upper (4) and a lower flank surface (4') as well as a joint (5), **characterized in that** the bearing surface (2) is provided with at least one circumferential chambering (10) which receives a wear-resistant coating (11), in particular a PVD coating, wherein a web shoulder (8, 9) is formed on the base body (1) outside the coating and starting from the web edges (6, 7) of the joint (5), seen in the circumferential direction of the base body (1), which web shoulder (8, 9) extends with a pre-definable radial height over a defined peripheral length on both sides of the joint (5).

2. A piston ring according to claim 1, **characterized in that** the web shoulder (8, 9) is made of the material of the base body (1), especially of cast iron or steel.

3. A piston ring according to claim 1 or 2, **characterized in that** the radial height of the web shoulder (8, 9) is comprised between 1 and 10 µm.

4. A piston ring according to one of the claims 1 through 3, **characterized in that** the web shoulder (8, 9) passes from the respective joint edge (6, 7) through a circumferential angle of up to 45° into the radius of the base body (1).

5. A piston ring according to one of the claims 1 through 4, **characterized in that** the web shoulder (8, 9) comprises the maximum radial height thereof on the side of the joint edge.

## Revendications

1. Segment de piston, notamment segment de piston de compression, comprenant un corps de base (1) qui comprend une surface de glissement radialement extérieure (2), une surface circonférentielle radialement intérieure (3), une surface de flanc supérieure (4) et inférieure (4') ainsi qu'une coupe (5), **caractérisé en ce que** la surface de glissement (2) est munie d'au moins un chambrage (10) circonférentiel qui reçoit un revêtement résistant à l'usure (11), notamment un revêtement en PVD, une saillie d'entretoise (8, 9) étant formée sur le corps de base (1) à l'extérieur du revêtement et à partir des bords d'entretoise (6, 7) de la coupe (5), vu dans la direction circonférentielle du corps de base (1), laquelle saillie d'entretoise (8, 9) s'étend avec une hauteur radiale pré-définissable sur une longueur de circonférence définie de part et d'autre de la coupe (5).

2. Segment de piston selon la revendication 1, **caractérisé en ce que** la saillie d'entretoise (8, 9) est fabriquée en la matière du corps de base (1), notamment en fonte ou en acier.

3. Segment de piston selon la revendication 1 ou la revendication 2, **caractérisé en ce que** la hauteur radiale de la saillie d'entretoise (8, 9) est comprise entre 1 et 10 µm.

4. Segment de piston selon l'une des revendications 1 à 3, **caractérisé en ce que** la saillie d'entretoise (8, 9) s'étend à partir du bord de coupe respectif (6, 7) sur un angle circonférentiel de jusqu'à 45° dans le rayon du corps de base (1).

5. Segment de piston selon l'une des revendications 1 à 4, **caractérisé en ce que** la saillie d'entretoise (8, 9) comprend sa hauteur radiale maximale du côté du bord de coupe.
